# EUROPÄISCHE PATENTANMELDUNG

(11) **EP 2 091 089 A1**
(43) Veröffentlichungstag der Anmeldung: **19.08.2009**
(21) Anmeldenummer: 08151538.9
(22) Anmeldetag: 15.02.2008
(51) Int. Cl.: H01L 31/058, F24J 2/04, F24J 2/24, E04D 13/18

(54) **Energieversorgungsvorrichtung mit einem Energiepanel und Energiepanel**

(71) Anmelder: Media-Group GmbH, 8738 Uetliburg (CH)
(72) Erfinder: Bieri, Martin, 4539 Rumisberg (CH)
(74) Vertreter: Rutz & Partner

(57) **Zusammenfassung**

Die Energieversorgungsvorrichtung weist wenigstens ein Energiepanel (1) auf, das eines oder mehrere Energiemodule (300) umfasst, die über Stromversorgungsleitungen (33) mit einem Verbraucher verbunden sind. Erfindungsgemäss ist wenigstens eine ausserhalb des wenigstens einen Energiepanels (1) geführte, metallene Rohrleitung (4) vorgesehen, die mit einer Kopplungsvorrichtung (22) mechanisch und thermisch mit dem Energiepanel (1) gekoppelt ist und in der wenigstens ein Kanal (41, 42) vorgesehen ist, durch den ein flüssiges Wärmetransportmedium (45) führbar ist, durch das thermische Energie von dem als lokale Wärmeenergiequelle dienenden Energiepanel (1) hin zu einer zentralen Wärmeenergiesenke (400) transferierbar ist.

## Beschreibung

Die Erfindung betrifft eine Energieversorgungsvorrichtung mit wenigstens einem Energiepanel sowie ein Energiepanel.

Energiepanel dienen der Aufnahme von Energie, die im Energiepanel in Wärmeenergie und/oder elektrische Energie umgewandelt und die an einen oder mehrere Verbraucher abgegeben wird. Eine Energieversorgungsvorrichtung besteht aus einem oder mehreren miteinander gekoppelter Energiepanel.

Ein Energiepanel dieser Art ist beispielsweise aus [1], EP 0 335 261 B1 bekannt. Dieses Energiepanel, umfasst einen Körper in der Form eines Dachziegels oder eines äusseren Wandbestandteils, eine Mehrzahl von Solarzellen, von denen jede an einer äusseren, Sonnenstrahlen ausgesetzten Oberfläche des Ziegels oder Wandbestandteils angeordnet ist, sowie einen Durchgangsweg für ein Wärmetransportmedium. Dieser Durchgangsweg liegt unter demjenigen Gebiet des Ziegels oder Wandbestandteils, an dem die Solarzellen angeordnet sind. Der Körper des Energiepanels ist aus einem Verbundstoff eines teilchenförmigen, anorganischen, körnigen oder faserigen Materials und eines wärmeleitenden Metalls hergestellt.

Das aus [1] bekannte Energiepanel, dessen Prinzip sich weitgehend durchgesetzt hat, sowie Vorrichtungen und Systeme, die auf diesen Energiepanels basieren, weisen verschiedene Nachteile auf. Aufgrund der Integration der Sonnenzellen und des Durchgangswegs für das Energietransportmedium in das Energiepanel resultiert ein relativ komplexer Aufbau des Energiepanels mit einem entsprechend hohen Herstellungsaufwand. Der Heizmitteldurchgangsweg, ein Kanal oder eine Rohrleitung, muss in das Energiepanel eingebettet und an dessen Eintrittsöffnung und Austrittsöffnung mit Kopplungselementen versehen sein, die es erlauben, die Durchgangswege mehrerer Energiepanel zu einer einzigen Rohrleitung bzw. einem einzigen Kanal zusammenzuschliessen, der vom Wärmetransportmedium durchflossen wird. Sofern zahlreiche solche Energiepanel zur Abdeckung eines Daches verwendet werden, resultiert somit eine hohe Anzahl von Kopplungspunkten, die auch nach längerer Betriebsdauer und mehrmaliger Betätigung noch dicht sein müssen. Weiterhin ist zu beachten, dass nur relativ dünne Rohrleitungen einsetzbar sind, weshalb ein relativ hoher Leitungswiderstand und ein entsprechend hoher Leitungsdruck resultiert, der hohe Anforderungen an die Qualität der Kopplungspunkte stellt. Sollten einzelne der Kopplungspunkte, beispielsweise nach mehrjähriger Betriebsdauer, ausfallen, so resultiert ein sehr hoher Wartungsaufwand. Einerseits ist die Fehlerstelle zu lokalisieren, andererseits ist der Defekt mit relativ grossem Aufwand zu beheben. Aufgrund des kleinen Durchmessers der Rohrleitung kann ferner nur eine geringe Menge von Heizmittel die miteinander gekoppelten Energiepanel durchfliessen, weshalb kein optimaler Wärmetransfer gewährleistet ist.

Aufgrund des mangelhaften Wärmetransfers resultiert nicht nur ein ungenügender Ertrag an Wärmeenergie, sondern auch eine nicht optimale Nutzung der Energiezellen, die bei höheren Temperaturen weniger elektrische Leistung abgeben.

Der vorliegenden Erfindung liegt daher die Aufgabe zugrunde, eine verbesserte Energieversorgungsvorrichtung mit wenigstens einem Energiepanel sowie ein verbessertes Energiepanel zu schaffen.

Insbesondere ist eine Energieversorgungsvorrichtung mit wenigstens einem Energiepanel zu schaffen, welche Sonnenenergie effizient in thermische und elektrische Energie umwandelt.

Die Energieversorgungsvorrichtung und die Energiepanel sollen zudem mit reduziertem Aufwand hergestellt, installiert und gewartet werden können.

Weiterhin soll die Energieversorgungsvorrichtung neue und vorteilhafte Leistungsmerkmale zur Verfügung stellen. Insbesondere sollen erfindungsgemässe Energieversorgungsvorrichtungen effizient und mit minimalem Aufwand verwaltet werden können

Diese Aufgabe wird mit einer Energieversorgungsvorrichtung mit wenigstens einem Energiepanel sowie mit einem Energiepanel gelöst, welche die in Anspruch 1 bzw. 8 angegebenen Merkmale aufweisen. Vorteilhafte Ausgestaltungen der Erfindung sind in weiteren Ansprüchen angegeben.

Die Energieversorgungsvorrichtung weist wenigstens ein Energiepanel auf, das eines oder mehrere, insbesondere der Aufnahme von Solarenergie dienender Energiemodule, wie Solarzellen, umfasst, die über Stromversorgungsleitungen mit einem Verbraucher verbunden sind. Erfindungsgemäss ist wenigstens eine ausserhalb des wenigstens einen Energiepanels geführte, metallene Rohrleitung vorgesehen, die durch eine Kopplungsvorrichtung mechanisch und thermisch mit dem Energiepanel gekoppelt ist und in der wenigstens ein Kanal vorgesehen ist, durch den ein flüssiges Wärmetransportmedium führbar ist, durch das thermische Energie von dem als lokale Wärmeenergiequelle dienenden Energiepanel hin zu einer zentralen Wärmeenergiesenke transferierbar ist.

Die erfindungsgemässe Energieversorgungsvorrichtung weist zahlreiche Vorteile auf. Besonders vorteilhaft ist, dass das Energiepanel bei dieser Lösung besonders einfach ausgestaltet und hergestellt werden kann. Da im Energiepanel ein Durchgang für das Wärmetransportmedium fehlt, reduziert sich der Herstellungsaufwand erheblich. Ferner kann der Raum optimal für das oder die eingesetzten Energiemodule verwendet werden.

Zudem können erfindungsgemässe Energiepanel in vorteilhafteren Abmessungen und Designs aus verschiedenen Materialien, wie Metall, insbesondere Aluminium, oder Ton gefertigt werden.

Die für den Wärmetransport vorgesehene, vorzugsweise horizontal zu montierende Rohrleitung, vorzugsweise ein Aluminiumprofil, ersetzt eine Lattung auf dem Dach oder einer Gebäudewand und wird beispielsweise an den senkrecht dazu verlaufenden Sparren des Dachstuhls montiert. Die Rohrleitung erfüllt daher eine Doppelfunktion. Einerseits dient sie der im Vergleich zu Holzlattung stabileren Montage der Energiepanel. Andererseits dient sie der Aufnahme und dem Abtransport der von den Energiepanels abgegebenen Wärmeenergie. Die Mehrkosten, die im Vergleich zu einer konventionellen Dachlattung resultieren, sind relativ gering und werden durch die reduzierten Herstellungskosten für die Energiepanel mehr als kompensiert. Zudem resultiert mit dem installierten Rohrleitungssystem eine äusserst stabile und zuverlässige Konstruktion, die auch schlechtesten Wetterbedingungen standhält. Aufgrund des relativ grossen Querschnitts Rohrleitung resultiert ein ausgezeichneter Wärmetransfer.

Besonders vorteilhaft ist auch, dass anhand des erfindungsgemässen Rohrleitungssystems, die Energiepanel, insbesondere darin vorgesehene elektrische Module, das Gebäudedach oder eine Gebäudewand gekühlt werden können. Zu diesem Zweck kann das Wärmetransportmittel in einer Kühlzone, beispielsweise im Erdboden auf tiefe Temperaturen gekühlt werden, bevor es die Rohrleitungen in den Bereich der Energiepanel gelangt. Durch diese Massnahme gelingt eine äusserst effiziente und kostengünstige Kühlung des Gebäudes, so dass auf Kühlaggregate verzichtet werden kann, die üblicherweise einen hohen Energieverbrauch aufweisen. Beispielsweise kann im Sommer die Erdsonde einer Wärmepumpe zur Zirkulation des Wärmetransportmittels verwendet werden.

Besonders vorteilhaft bei der erfindungsgemässen Energieversorgungsvorrichtungen ist, dass das metallene Rohrleitungssystem sowie die zumindest teilweise aus Metall bestehenden Energiepanel die Einwohner des betreffenden Gebäudes gegen Einwirkungen von Strahlungen und Elektrosmog, im entsprechenden Ausgestaltungen sogar gegen Blitzschlag schützen. Die heute vielfach gefürchtete Einstrahlung von Hochfrequenzwellen wird daher vorteilhaft abgewehrt.

Die Ankopplung der Energiepanel an die Rohrleitung kann mit einfachen Massnahmen erfolgen, wobei ein praktisch vernachlässigbar geringer Wärmeübergangswiderstand resultiert. Die vom Energiepanel aufgenommene Wärmeenergie wird daher effizient an die Rohrleitung übertragen und von dieser abgeführt. Damit ergibt sich auch eine gute Kühlung der Energiepanel, weshalb die Energiezellen, gegebenenfalls Solarzellen, optimal arbeiten und maximale elektrische Energie abgeben können.

In einer vorzugsweisen Ausgestaltung weist die Rohrleitung wenigstens einen ersten Kanal, in dem das Wärmetransportmedium in eine Richtung geführt wird, und wenigstens einen zweiten Kanal auf, in dem das Wärmetransportmedium zurückgeführt wird. An einem Ende der Rohrleitung ist daher ein Abschlussstück vorhanden, durch das das aus dem ersten Kanal eintreffende Wärmetransportmedium in den zweiten Kanal überführt wird. Am anderen Ende der Rohrleitung kann das Wärmetransportmedium somit an derselben Stelle zugeführt und entnommen werden. Bei dieser Ausgestaltung der Rohrleitung kann das gesamte Rohrleitungssystem einfach geplant und aufgebaut werden. Die Führung des Wärmetransportmediums in beide Richtungen innerhalb der Rohrleitung führt auch zur Ausmittelung der Temperaturen die an unterschiedlichen Stellen der Rohrleitung auftreten können.

Vorteilhaft kann es sein, das Rohrleitungssystem in Segmente aufzuteilen, die unabhängig voneinander je mit einer Umwälzpumpe betrieben werden. Vorzugsweise werden die Segmente derart gebildet, dass sie einzelnen Zonen der Sonnenbestrahlung zugeordnet sind. Beispielsweise kann ein erstes Segment des Rohrleitungssystems auf der südlichen Seite des Satteldachs und ein zweites Segment an der Westwand eines Hauses angeordnet werden. Die Trennung der genannten Segmente erspart entsprechende Verbindungsleitungen und ist bereits aus diesem Grund sinnvoll. Die Trennung ist jedoch auch deshalb sinnvoll, weil die betreffenden Segmente jeweils zu der Zeit betrieben werden können, in der für jedes Segment die optimale Sonnenbestrahlung vorliegt.

Als Wärmetransportmedium eignet sich Wasser. Die vorteilhafte Ausgestaltung der erfindungsgemässen Energieversorgungsvorrichtung erlaubt jedoch auch die Verwendung von Öl, welches für den Wärmetransport hervorragend geeignet ist.

Um Wärmeverluste zu vermeiden, ist die Rohrleitung vorzugsweise mit einer Isolationsschicht versehen, die vorzugsweise nur an den Stellen unterbrochen ist, an denen die Rohrleitung thermisch und mechanisch mit dem Energiepanel gekoppelt ist. Auf diese Weise ist gewährleistet, dass die gewonnene Wärmeenergie auf dem Transportweg nicht verloren geht.

Die Verwendung einer externen Rohrleitung ist auch deshalb besonders vorteilhaft, weil diese mit einem achsparallel verlaufenden Kabelkanal versehen werden kann, der vorzugsweise in Form einer z.B. Schwalbenschwanz-förmigen Ausnehmung oder Nut in den Körper der Rohrleitung eine gearbeitet wird. In diesem gut geschützten und trotzdem leicht zugänglichen Kabelkanal, der dem Energiepanel zugewandt ist, werden die Stromversorgungsleitungen, mit denen die von den Energiemodulen abgegebene elektrische Energie transferiert wird, und gegebenenfalls Datenleitungen, insbesondere Steuerleitungen angeordnet, die der Datenübertragung zwischen einer zentralen Steuereinheit und dezentralen bzw. lokal in den Energiepanels vorgesehenen Steuereinheiten dienen. Die genannten Leitungen können in Form eines Flachbandkabels vorliegen, das vorzugsweise in den erforderlichen Abständen mit elektrischen Verbindern versehen ist, von denen jeder mittels eines weiteren Verbinders mit der Anschlussleitung eines Energiepanels verbindbar ist.

Durch die Verwendung einer zentralen Steuereinheit sowie lokalen Steuereinheiten, die vorzugsweise mit lokal auf den Energiepanels angeordneten Stromspeichern und/oder Sensoren verbunden sind, ergeben sich im Zusammenhang mit dem erfindungsgemässen Energieversorgungssystem zahlreiche vorteilhafte Möglichkeiten. Anhand von Sensoren kann der Status des Energiepanels sowie der Status der Umgebung festgestellt werden. Nach Übertragung der ermittelten Daten zur zentralen Steuereinheit kann diese das gesamte System beziehungsweise die Energieversorgungsvorrichtung optimal steuern. Beispielsweise können einzelne Segmente des Rohrleitungssystems zu- oder abgeschaltet werden.

Besonders vorteilhaft ist die Verwendung wenigstens eines Stromspeichers in jedem Energiepanel. Anhand heute bekannter Akkumulatoren kann die gewonnene Energie lokal gespeichert und erst bei Bedarf und unter optimalen Bedingungen abgegeben werden. Eine zentrale Stromspeichereinheit kann gegebenenfalls eingespart werden. Anhand heute bekannter Akkumulatoren, beispielsweise Lithium-Ionen Akkumulatoren, die typischerweise Energiedichten von 100 Wh/kg und Leistungsdichten von 1'000 W/k aufweisen, können somit enorme Energiemengen lokal gespeichert und bei Bedarf abgegeben werden. Anhand der lokalen Steuereinheiten können diese Akkumulatoren überwacht und in einem optimalen Arbeitsbereich gehalten werden, um beispielsweise eine vollständige Entladung derselben zu verhindern. Die gespeicherte elektrische Energie kann ferner in einer bevorzugten Form, gegebenenfalls auf höhere Werte transformiert und abgegeben werden, um Verluste zu reduzieren.

Unter Berücksichtigung der von der zentralen Steuereinheit zugeführten Steuerbefehle kann die lokale Steuereinheit den Energietransfer optimieren und gegebenenfalls bei einem Abruf von Energie die Energielieferung verweigern, wenn dies die Sachlage erfordert. Die lokale Steuereinheit kann daher den von den Energiemodulen abgegebenen Strom hin zu der im Energiepanel vorgesehenen lokalen Stromspeichereinheit oder hin zu wenigstens einem zentralen Stromabnehmer steuern. Der zentrale Stromabnehmer kann ein Akkumulator oder ein Energiewandler sein, der Wechselstrom an ein internes oder externes Netz abgibt.

Die mechanische und thermische Ankopplung an die Rohrleitung erfolgt mit einer Kopplungsvorrichtung, deren Elemente ganz oder teilweise einstückig an der Rohrleitung und/oder einstückig an einem Metallkörper des Energiepanels angeformt oder auch als separate Garnituren zur Verfügung gestellt werden können.

Vorzugsweise wird eine Rohrleitung mit zumindest annähernd und/oder teilweise kreisförmigem Querschnitt verwendet, so dass montierte Flanschen oder Schellen, die flächig an der Rohrleitung anliegen, in eine passende Lage gedreht und mit hohem Anpressdruck kraftschlüssig mit der Rohrleitung verbunden werden können. Besonders vorteilhaft können auch Kopplungselemente verwendet werden, die einer formschlüssigen Kopplung dienen. Beispielsweise können ineinander eingreifende Verzahnungen vorgesehen werden, die in wählbaren Positionen fixierbar sind.

Sofern eine separate Kopplungsgarnitur verwendet wird, kann diese optimal, insbesondere mit grösstmöglichen Kontaktflächen, einerseits an die Rohrleitung und andererseits an das Energiepanel angepasst werden. Gleichzeitig ist es leicht möglich die separate Kopplungsgarnitur zu montieren und zu justieren. Vorzugsweise werden Öffnungen im Energiepanel vorgesehenen, durch die hindurch Werkzeuge führbar sind, mittels derer die Kopplungsvorrichtung fest gezogen oder gelöst werden kann.

Energiepanel für die erfindungsgemässe Energieversorgungsvorrichtung, die mit einem oder mehreren Energiemodulen versehen sind, können besonders einfach hergestellt und montiert werden. Die Energiepanel können optimal für die Aufnahme der Energiemodule sowie die Ankopplung an die Rohrleitung vorbereitet werden, wobei durch grosse Kontaktflächen oder die einstückige Anformung der Kopplungselemente an den Metallkörper des Energiepanels ein optimaler Wärmetransfer gewährleistet wird.

Der Metallkörper des Energiepanels, der als lokale Wärmesenke dient, ist einstückig mit einem Kühlelement verbunden, welches die vom Energiepanel aufgenommene Wärmeenergie absorbiert, und mit einer Kopplungsvorrichtung verbindbar oder einstückig verbunden, die mit der Rohrleitung derart verbindbar ist, dass die vom Kühlelement aufgenommene Wärmeenergie an die Rohrleitung transferierbar und das Energiepanel gleichzeitig stabil gehalten ist. Das Kühlelement ist mit dem Energiemodul vorzugsweise thermisch und gegebenenfalls auch mechanisch eng gekoppelt, so dass dieses optimal gekühlt wird. Vorzugsweise liegt das Energiemodul über grosse Kontaktflächen am Kühlelement an und ist mit diesem verschraubt, so dass der Wärmeübergangswiderstand zwischen den Kontaktflächen vernachlässigbar klein ist.

In einer ersten prinzipiellen Ausgestaltung weist das Energiepanel eine Struktur mit wenigstens einer Öffnung auf, innerhalb der der Metallkörper von einer Gussmasse gehalten ist. Beispielsweise wird ein Tonziegel gefertigt, der wenigstens eine Öffnung aufweist, die der Aufnahme des Energiemoduls und des Metallkörpers dient. In einer vorzugsweisen Ausgestaltung können der Metallkörper und das wenigstens eine Energiemodul auch als kombiniertes Modul vorgefertigt und in den Tonziegel eingesetzt werden.

In einer zweiten prinzipiellen Ausgestaltung weist das Energiepanel eine metallene Struktur auf, mit der der Metallkörper einstückig verbunden ist. Beispielsweise wird eine Metallstruktur aus Aluminium gefertigt, in die das wenigstens eine Energiemodul einsetzbar ist. Ferner kann die Metallstruktur mit einer grossen Kopplungsfläche für die Kopplungsvorrichtung oder auch mit einem einstückig angeformten Kopplungselement versehen sein. In beiden Fällen können die Kopplungselemente optimal und mit geringem Aufwand gefertigt werden.

Die in Form eines Ziegels oder eines Wandelements vorliegende Struktur weist wenigstens eine Öffnung auf, innerhalb der wenigstens ein Energiemodul mittels der Gussmasse oder Befestigungselementen gehalten ist, beispielsweise Schrauben, anhand derer das Energiemodul mit den Kopplungselement verbunden ist.

In einer vorzugsweisen Ausgestaltung sind Halteelemente, beispielsweise Führungsnuten vorgesehen, in die das Energiemodul einschiebbar ist, welches nach dem Einschub vorzugsweise über Anschlusskontakte mit Kopplung Leitungen verbunden ist. Durch diesen modularen Zusammenbau ergeben sich wiederum minimale Herstellungskosten und ein minimaler Montageaufwand. Für den Fall eines technischen Defekts kann das defekte Energiemodul innerhalb weniger Sekunden entnommen und durch eine neue Einheit ersetzt werden. Vorzugsweise weist die Struktur eine Öffnung auf, die nach Entnahme der Energiemodule oder mittels einer Klappe offen gelegt werden kann und die Zugriff auf Kopplungselemente bietet, die es erlauben das Energiepanel zu montieren oder zu lösen.

Sofern das Energiepanel mit einer lokalen Steuereinheit und/oder einer lokalen Speichereinheit ausgerüstet werden soll, ist dieses vorzugsweise mit einer für die Aufnahme dieser Elemente geeigneten Kammer versehen. Diese vorzugsweise einstückig mit dem Metallkörper verbundene Kammer weist eine Öffnung auf, durch die ein mit der Steuereinheit verbundenes Anschlusskabel geführt ist, welches mit den in der Rohrleitung geführten Stromversorgungsleitungen und Datenleitungen verbindbar ist.

Die Kammer ist durch eine Klappe oder, besonders vorteilhaft, durch das in die Halteelemente einschiebbare Energiemodul abschliessbar.

Nachfolgend wird die Erfindung anhand von Zeichnungen näher erläutert. Dabei zeigt:
- Fig. 1: eine erfindungsgemässes Energieversorgungssystem mit einem Energiepanel 1, in dem ein Metallkörper 2 vorgesehen ist, hat der thermisch und mechanisch mit einer Rohrleitung 4 gekoppelt ist;
- Fig. 2: in dreidimensionaler Darstellung, den Metallkörper 4 des Energiepanels 1 von Figur 1, der ein der Absorption von Wärmeenergie dienendes Kühlelement 21, ein mit der Rohrleitung verbindbares Kopplungselement 22 sowie eine Kammer 23 aufweist, die der Aufnahme einer Steuereinheit 3 und eines Stromspeichers 38 dient;
- Fig. 3: in dreidimensionaler Darstellung ein Segment der Rohrleitung 4 von Figur 1, die zwei der Führung des Wärmetransportmediums dienende Kanäle 41, 42 sowie eine axial verlaufende Schwalbenschwanzförmige Ausnehmung 47 aufweist, in der z.B. in Form eines Flachbandkabels vorliegende Stromleitungen 33 und Steuerleitungen 34 eingefügt werden;

- Fig. 4: zwei je mit einer Rohrleitung 4 verbundene Energiepanel 1 in einer ersten Ausgestaltung;
- Fig. 5: ein mit einer Rohrleitung 4 verbundenes Energiepanel 1 in einer zweiten Ausgestaltung;
- Fig. 6: mehrere an Rohrleitungen 4 auf einem Dach montierte Energiepanel 1 gemäss Figur 5;
- Fig. 7: ein Blockschaltbild der erfindungsgemässen Energieversorgungsvorrichtung von Figur 1;
- Fig. 8: der Metallkörper 2 von Figur 2 in einer weiteren Ausgestaltung, in der die Struktur 5 des Energiepanels 1 gegebenenfalls einstückig aus Metall gefertigt ist;
- Fig. 9: der Metallkörper 2 von Figur 8 in einer weiteren Ausgestaltung, der mittels einer Kopplungsgarnitur 271, 272, 273 mit der Rohrleitung 4 verbunden ist, die im wesentlichen einen kreisrunden Querschnitt aufweist;
- Fig. 10: ein Energiepanel 1 gemäss Figur 5, in das ein Energiemodul 300 einschiebbar ist; und
- Fig. 11: Elemente des Rohrleitungssystems mit Segmenten von Rohrleitungen 4 gemäss Figur 2, die anhand von Kopplungselementen 81 mechanisch miteinander verbindbar sind und deren Kanäle 41,42 anhand von Verbindungsteilen 83, 84, 85 zusammenschliessbar oder mit Zufluss- und Abschlussleitungen verbindbar sind.

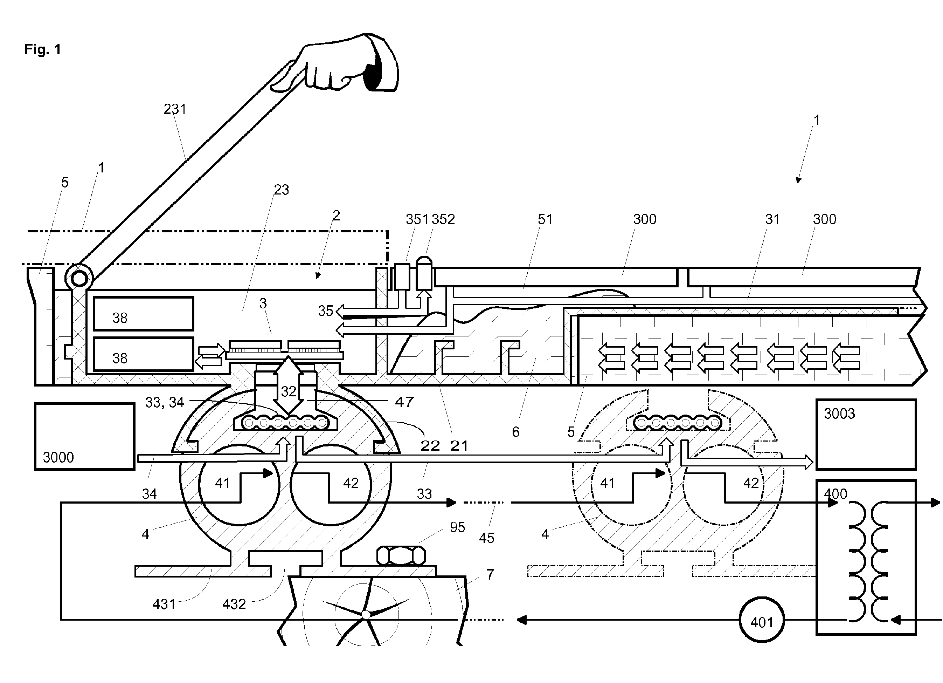

Figur 1 zeigt ein erfindungsgemässes Energieversorgungssystem mit einem Energiepanel 1, das thermisch und mechanisch mit einer Rohrleitung 4 eines Rohrleitungssystems verbunden ist, in dem ein Wärmetransportmedium 45 zirkuliert.

Das Energiepanel 1 weist eine beispielsweise aus Ton oder Metall bestehende Struktur 5 mit einer Öffnung 51 auf, in die mehrere vorzugsweise der Aufnahme von Sonnenenergie dienende Energiemodule 300 und ein Metallkörper 2 eingesetzt sind. Der Metallkörper 2 weist ein der Aufnahme von Wärmeenergie dienendes Kühlelement 21, eine der Ankopplung an die Rohrleitung 4 dienende Kopplungsvorrichtung 22 sowie eine mittels einer Klappe 231 abschliessbare Kammer 23 auf, in der eine Steuereinheit 3 und zwei Stromspeichereinheiten 38 vorgesehen sind. Die in der Kammer 23 vorgesehene Steuereinheit 3 ist über Leitungen 35 mit wenigstens einem Sensor 353 und wenigstens einem Signalgeber 352, z.B. einer Leuchtdiode, verbunden.

In dieser Ausgestaltung des Energiepanels 1 werden der Metallkörper 2, die Energiemodule 300 und gegebenenfalls auch die Sensoren 351 und Signalgeber 352 mittels einer vorzugsweise thermisch gut leitenden Gussmasse 6 innerhalb der Öffnung 51 der Struktur 5 an den entsprechenden Positionen fixiert.

Das erfindungsgemässe Energiepanel 1 dient der Abgabe elektrischer Energie und Wärmeenergie. Die von den Energiemodulen 300 abgegebenen elektrische Energie wird über Anschlussleitungen 31 der lokalen Steuereinheit 3 zugeführt, von der elektrische Energie an die lokalen Speichereinheiten 38 oder über eine Stromversorgungsleitung 33 an externe Verbraucher bzw. einen vorgeschalteten Energiewandler 3003 abgegeben wird.

Ferner ist eine zentrale Steuereinheit 3000 vorgesehen, die über einen Datenbus 34 mit den lokalen Steuereinheiten 3 kommuniziert. Nebst dem Energiemanagement, das von der zentralen Steuereinheit 3000 und den lokalen Steuereinheiten 3 gesteuert wird, kann vor Inbetriebnahme der Energiepanel 1 auch eine Authentisierungsprozedur durchgeführt werden, mit der festgestellt wird, ob die zentrale Steuereinheit 3000 autorisiert ist, die installierten Energiepanel 1 zu betreiben. Beispielsweise werden zwischen den Steuereinheiten 3, 3000 Kennworte ausgetauscht und geprüft, ob diese zueinander korrespondieren. Entwendete Energiepanel 1 können daher an anderen Installationsorten nicht mehr verwendet werden und sind für den Anwender wertlos. Das Entwenden derart geschützter Energiepanel 1 ist daher nicht lohnend.

Die Stromversorgungsleitungen 33 und die Steuerleitungen 34 können vorteilhaft als Flachbandkabel realisiert werden, das besonders vorteilhaft in der in der Rohrleitung 4 vorgesehenen, achsparallel verlaufenden Ausnehmung 47 geführt werden kann. Das Flachbandkabel 33, 34 kann mit Verbindern versehen sein, an die ein Anschlusskabel 32 abschliessbar ist, das durch eine Öffnung 234 in der Kammer 23 geführt und mit der lokalen Steuereinheit 3 verbunden ist. Besonders vorteilhaft sind Flachbandkabel und Verbindungsvorrichtungen verwendbar, wie sie in [2], FLACHKABELSYSTEM TECHNOFIL, Produkteschrift der Woertz AG, Muttenz vom Mai 2004 gezeigt und beschrieben sind. Die darin offenbarten Anschlussdosen können auf das Flachbandkabel 33, 34 aufgesetzt und mittels Spitzeschrauben mit den Adern des im Kabelkanal 47 liegenden Flachbandkabels 33, 34 verbunden werden. Vorzugsweise wird eine an die Rohrleitung angepasste Dose verwendet.

Von der lokalen Steuereinheit 3 kann der Stromtransfer von und zu den lokalen Speichereinheiten 38 und von und zu den externen Verbrauchern beliebig gesteuert werden. Sofern Lithium-Ionen-Akkumulatoren als Speichereinheiten 38 verwendet werden, so ist die lokale Steuereinheit 3 dafür besorgt, dass diese stets in einem günstigen Arbeitsbereichs betrieben werden. Die gewonnene elektrische Energie kann daher lokal gespeichert und durch die zentrale Steuereinheit 3000 nach Bedarf abgerufen werden, wobei der optimale Betrieb der Akkumulatoren sichergestellt ist.

Es ist zu beachten, dass bei der erfindungsgemässen Energieversorgungsvorrichtung der Transfer elektrischer und/oder thermischer Energie anhand der zentralen und lokalen Steuereinheiten 3, 3000 in beide Richtungen erfolgen kann. Beispielsweise können die lokal vorgesehenen Stromspeichereinheiten 38 mittels elektrischer Energie geladen werden, die aus dem öffentlichen Stromnetz entnommen wird. Die Anlage kann daher installiert und hochgefahren werden, auch wenn keine genügende Sonneneinstrahlung vorhanden ist. Durch den Transfer thermischer Energie zu denen Energiepanel 1 können diese in einen idealen Betriebs Zustand versetzt, beispielsweise von einer Schneeschicht befreit werden.

Die vom Energiepanel 1 bzw. die von der Struktur 5 des Energiepanels 1 und von den Energiemodulen 300 aufgenommene Wärmeenergie wird von dem als lokale Wärmesenke dienenden Metallkörper 2, insbesondere von dessen Kühlelement 21, aufgenommen, das zu diesem Zweck flächig entlang den Energiemodulen 300 und der Oberfläche der Struktur 5 gezogen ist. In vorzugsweisen Ausgestaltungen werden die Energiemodule 300 mit dem Kühlelement 21 verschraubt, so dass der Metallkörper 2 und die Energiemodule 300 eine Einheit bilden, die als Modul in die Öffnung 51 der Struktur 5 eingesetzt und darin befestigt, gegebenenfalls verschraubt, vorzugsweise vergossen werden kann.

Vom Kühlelement 21 des Metallkörpers 2 wird die gewonnene Wärmeenergie über die Kopplungsvorrichtung 22 an die Rohrleitung 4 abgegeben, die zwei Kanäle 41,42 aufweist, in denen ein Wärmetransportmedium 45 innerhalb der Rohrleitung 4 vor und zurück fliesst und die zugeführte Wärmeenergie zu einem Wärmetauscher 400 führt und von dort mittels einer Umwälzpumpe 401 in den Kreislauf zurückgeführt wird.

Die Rohrleitung 4 weist Montageelemente in Form von Flanschen 431, die mit Elementen eines Dachstuhls oder einer Gebäudewand verbindbar sind. In Figur 1 ist gezeigt, dass ein Flansch 431 der Rohrleitung 4 mittels einer Schraube 95 mit einer Holzsparre 7 verschraubt ist. Zahlreiche andere Montagemöglichkeiten fallen ebenfalls in Betracht und erlauben es gegebenenfalls, auf die Montageelemente 431 zu verzichten. Beispielsweise kann eine Rohrleitung 4 mit einem kreisförmigen Querschnitt verwendet werden, die mittels einer Klammer oder eines Bügels gehalten wird.

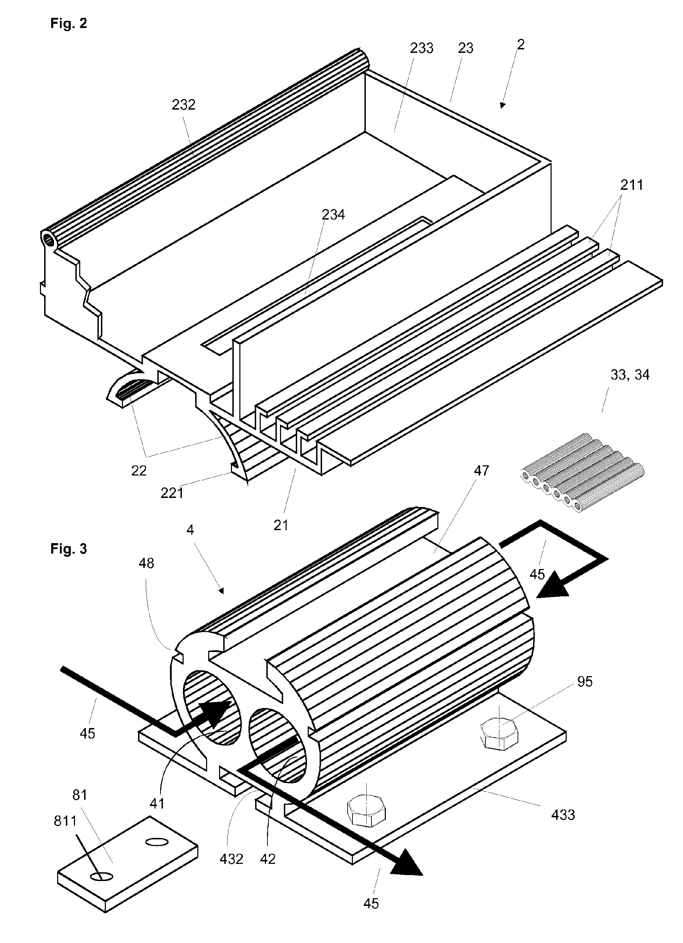

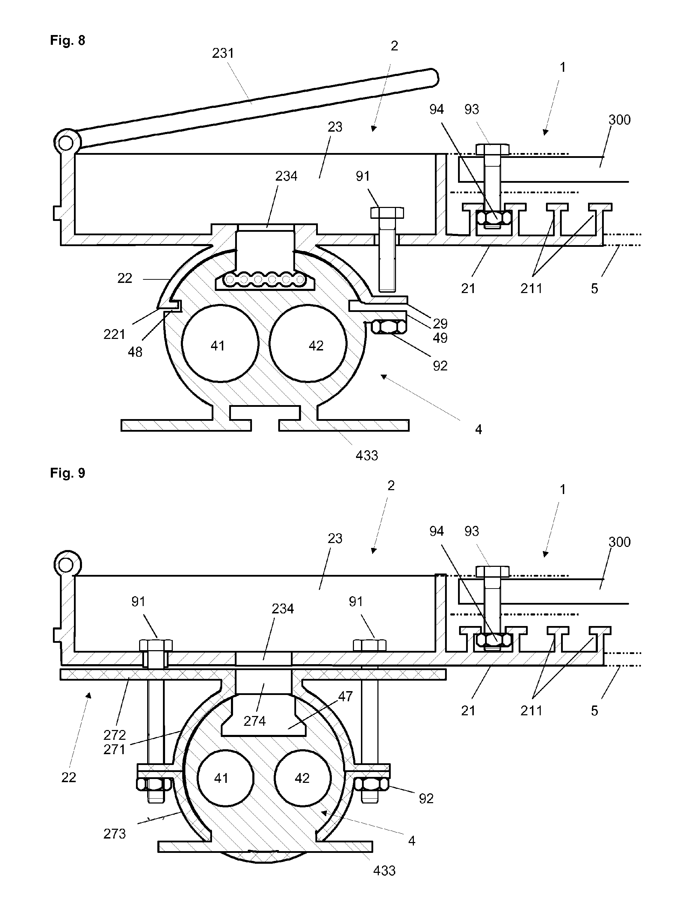

Figur 2 zeigt in dreidimensionaler Darstellung, den Metallkörper 2 des Energiepanels 1 von Figur 1, der das der Absorption von Wärmeenergie dienende Kühlelement 21, das mit der Rohrleitung verbindbare Kopplungselement 22 sowie die Kammer 23 aufweist, deren Innenraum 233 der Aufnahme der Steuereinheit 3 und des Stromspeichers 38 dient. Gut ersichtlich ist die in der Kammer 23 vorgesehene Öffnung 234, durch die das Anschlusskabel 32 hindurch zur Rohrleitung 4 führbar ist. Das Kühlelement 21 ist mit Kühlrippen 211 versehen, welche der Aufnahme von Wärmeenergie und der Verankerung in der Gussmasse 6 dienen. Das bogenförmige Kopplungselement 22 weist an dessen Enden Halterippen 221 auf, die in entsprechende, in der Rohrleitung 4 vorgesehene Haltenuten 48 eingreifen können. Das Kopplungselement 22 kann daher auf die Rohrleitung 4 gepresst werden, bis die Halterippen 221 in den Haltenuten 48 einrasten (siehe Figur 1). Zum Lösen des Kopplungselements 22 müssen die Halterippen 221 aus den Haltenuten 48 gezogen werden. Alternative Ausgestaltungen sind in den Figuren 8 und 9 gezeigt.

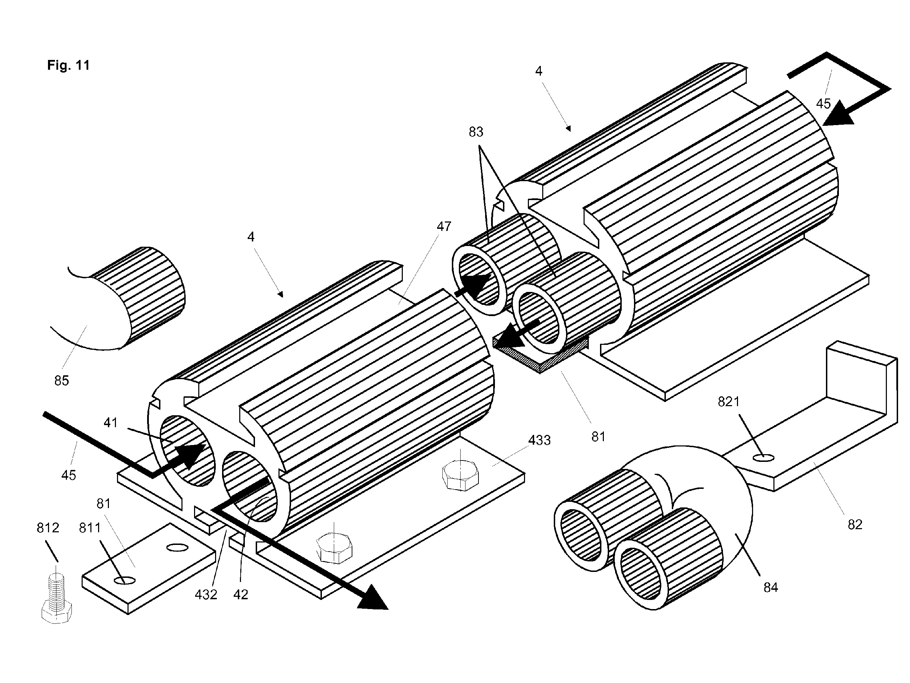

Figur 3 zeigt in dreidimensionaler Darstellung ein Segment der Rohrleitung 4 von Figur 1 mit den zwei der Führung des Wärmetransportmediums dienenden Kanälen 41, 42 sowie der axial verlaufenden Schwalbenschwanz-förmigen Ausnehmung 47, innerhalb der das Flachbandkabel 33, 34 geführt ist. Schematisch ist ferner der Verlauf des Wärmetransportmediums 45 gezeigt, welches frontseitig in den Kanal 41 eintritt und aus dem Kanal 42 wieder austritt. Ferner ist ein Kopplungselement 81 gezeigt, welches in Kopplungsnuten 432 von zwei benachbarten Rohrleitungen 4 einführbar und darin mittels Schrauben 812 arretierbar ist (siehe Figur 11).

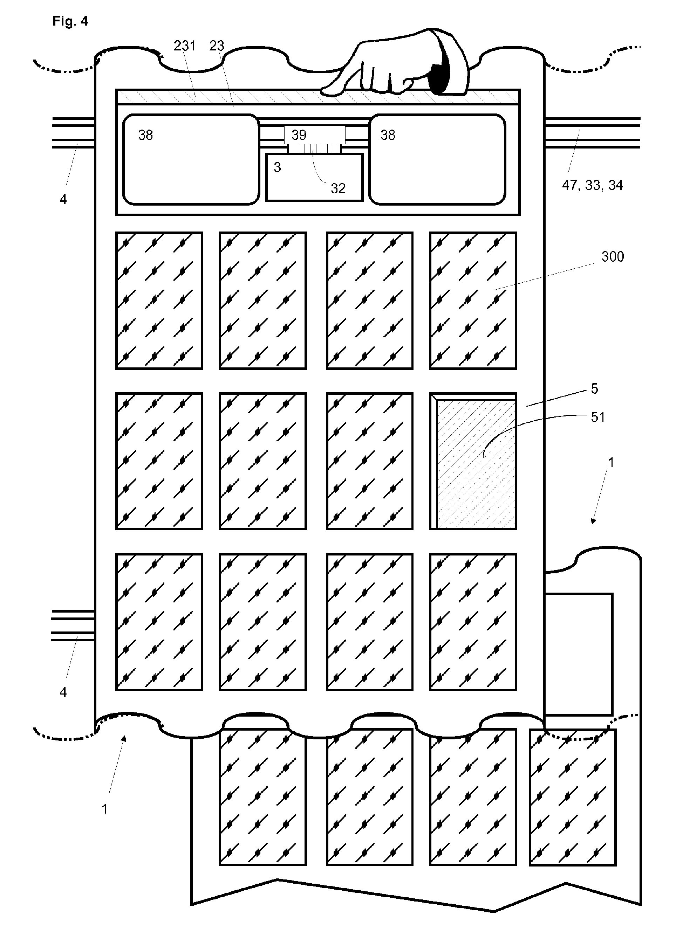

Figur 4 zeigt zwei je mit einer Rohrleitung 4 verbundene Energiepanel 1 in einer ersten Ausgestaltung. Beim oberen Energiepanel 1 ist die Klappe 231 der Kammer 23 geöffnet. In der Kammer 23 sind zwei Energiespeicher 38 und die lokale Steuereinheit 3 vorgesehenen, die über das Anschlusskabel 32 und einen Verbinder 39 mit dem in der Rohrleitung 4 geführten Flachbandkabel 33, 34 verbunden ist. Besonders einfach kann die elektrische Ankopplung an das Flachbandkabel 33, 34 erfolgen, wenn dieses aus der in der Rohrleitung 4 vorgesehenen Ausnehmung 47 herausgeführt und in die im Metallkörper 2 vorgesehene Kammer 2 hineingeführt wird. Die Ausnehmung 47 und die Öffnung 234 in der Kammer 23 sind in fachmännischer Weise anzupassen.

In Figur 4 ist weiter gezeigt, dass das obere Energiepanel 1 das untere Energiepanel 1 derart überlappt, dass die dortige Kammer 23 vollständig überdeckt ist. Von oben sind daher nur die Energiemodule 300 sichtbar, von denen eines entnommen wurde, um Einblick in die Öffnung 51 der Struktur 5 des Energiepanels 1 zu gewähren. Durch die Integration der Kammer 23 in das Energiepanel 1 resultiert somit kein Verlust an Oberfläche, die mit Energiemodulen abgedeckt werden kann.

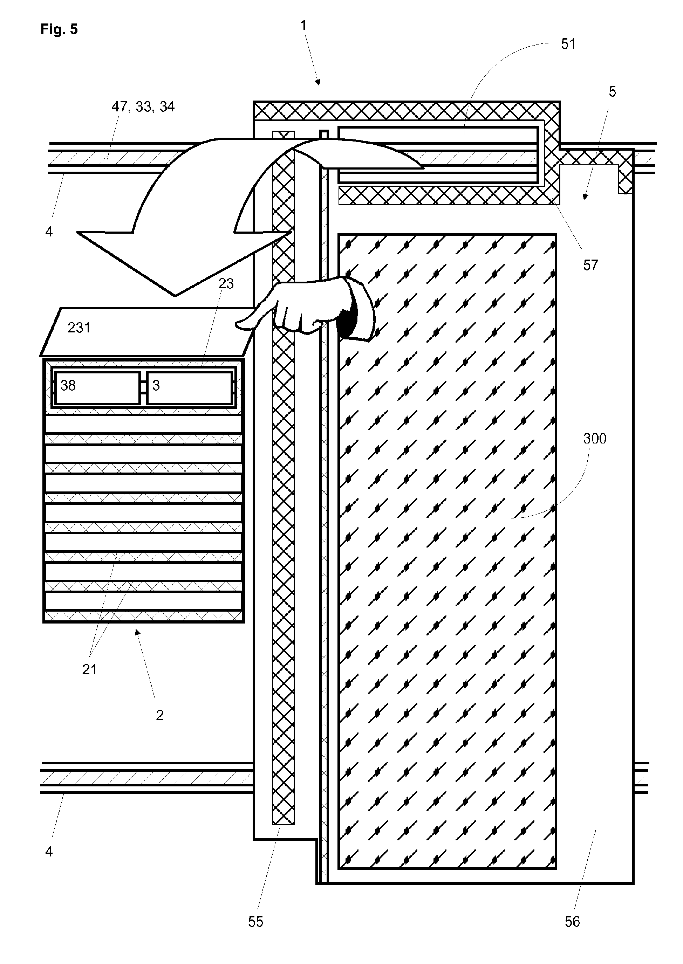

Figur 5 zeigt ein mit einer Rohrleitung 4 verbundenes Energiepanel 1 in einer zweiten Ausgestaltung. Es ist gezeigt, dass der Metallkörper 2 (siehe Figur 2) entnommen wurde, so dass die Öffnung 51 in der Struktur 5 des Energiepanels 1 frei liegt. Gezeigt ist, dass die Struktur seitlich Randabschlusselemente 55, 56 aufweist, die zu Randabschlusselementen 56 bzw. 55 benachbarter Energiepanel 1 korrespondieren. Im Bereich der Kammer 23 bzw. unterhalb der Öffnung 51 ist ferner ein Abschlussstück 57 vorgesehen, welches vom nächsthöheren Energiepanel 1 überdeckt wird und verhindert, dass von diesem eintreffendes Regenwasser in die Kammer 23 eindringen kann.

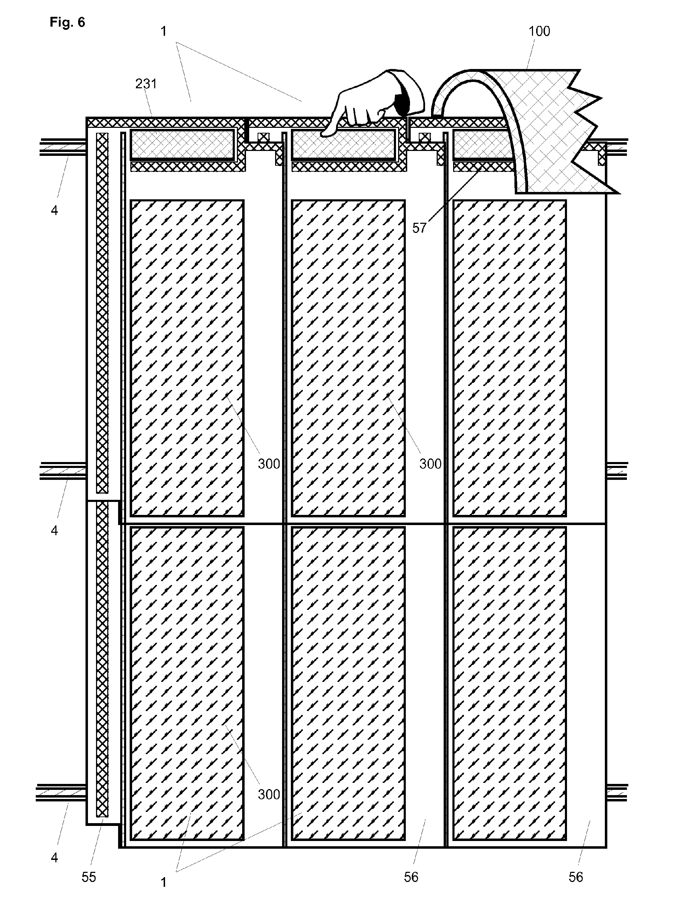

Figur 6 zeigt mehrere an Rohrleitungen 4 auf einem Dach montierte Energiepanel 1 gemäss Figur 5, deren Randabschlusselemente 55, 56 einander überdecken. Überdeckt sind auch die Abschlussstücke 57 der unteren Reihe der Energiepanel 1. Die Abschlussstücke 57 der oberen Reihe der Energiepanel 1 werden durch Firstabschlussziegel 100 überdeckt.

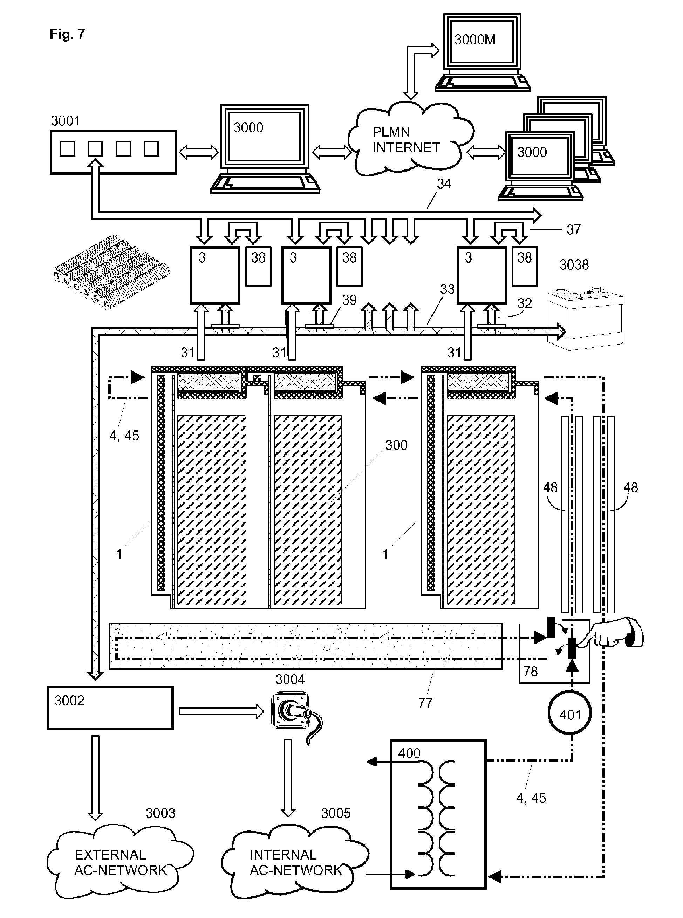

Figur 7 zeigt ein Blockschaltbild der erfindungsgemässen Energieversorgungsvorrichtung von Figur 1. In der oberen Bildhälfte ist gezeigt, dass die zentrale Steuereinheit 3000, die vorzugsweise an das Internet oder ein Mobilfunknetz PLMN angeschlossen ist, über ein Netzwerkmodul 3001 und die Datenleitungen 34 mit den lokalen Steuereinheiten 3 verbunden ist. Die zentrale Steuereinheit 3000, beispielsweise ein Personalcomputer, kann daher auch über das Mobilfunknetz oder das Internet gesteuert werden. Beispielsweise werden der zentralen Steuereinheit 3000 meteorologische Daten übermittelt, anhand derer das Energiemanagement des lokalen Energieversorgungssystems bzw. die Energieversorgungsvorrichtung gesteuert wird. Ferner kann der zentralen Steuereinheit 3000 ein Plan mit Terminen mitgeteilt werden, zu denen die gewonnene Energie zu bestmöglichen Konditionen an das öffentliche Netz abgegeben werden kann. Mehrere lokale Energieversorgungssysteme können beispielsweise auch von einer übergeordneten Steuereinheit 3000M koordiniert werden, welcher mit einem Betreiber eines öffentlichen Netzes in Verbindung steht und mit diesem optimale Konditionen für die Lieferung elektrischer Energie aushandeln kann. Die Administration für alle lokalen Energieversorgungssysteme kann in diesem Fall von der übergeordneten Steuereinheit 3000M übernommen werden. Der Betreiber eines lokalen Energieversorgungssystems bleibt von davon entsprechenden Aufwendungen entlastet. An das öffentliche Netz abgegebene Energiemengen werden lokal gemessen und zur zentralen Steuereinheit 3000 gemeldet und von dieser abgerechnet.

In Figur 7 ist ferner gezeigt, dass das Wärmetransportmedium über einen Umschalter 78 auch durch einen gekühlten Bereich, beispielsweise den Erdbereich 77 oder die Sonde einer Wärmepumpe geführt werden kann. Im Sommer kann das Dach des Gebäudes daher mittels des gekühlten Wärmetransportmediums gekühlt werden, so dass sich weitere Kühlvorrichtungen erübrigen.

Die lokalen Steuereinheiten 3 sind ihrerseits über Anschlussleitungen 31 mit den Energiemodulen 300, über Anschlussleitungen 37 mit den lokalen Speichereinheiten 38 und über Anschlussleitungen 32 und einen Verbinder 39 mit der Stromversorgungsleitung 33 verbunden. Die Stromversorgungsleitungen 33 sind einerseits mit einem optional vorgesehenen, zentralen Akkumulator 3038 und andererseits einem mit einem optional vorgesehenen Energiewandler 3002 verbunden, der eine Wechselspannung an ein externes oder internes Wechselspannungsnetz 3003, 3005 und entsprechende Anschlussdosen 3004 abgeben kann. Schematisch ist gezeigt, dass die Stromversorgungsleitungen 33 und Datenleitungen bzw. Steuerleitungen 34 mit einem Flachbandkabel realisiert werden können. Schematisch ist ferner der mittels des Rohrleitungssystems realisierte Kreislauf für das Wärmetransportmedium 45 gezeigt. Gezeigt ist ferner, dass die Elemente des Rohrleitungssystems vorzugsweise mit thermisch isolierenden Materialien 48 versehen sind, so dass auf dem Transportweg keine Energieverluste auftreten.

Figur 8 zeigt den Metallkörper 2 von Figur 2 in einer weiteren Ausgestaltung, in der die Struktur 5 des Energiepanels 1 gegebenenfalls einstückig aus Metall, vorzugsweise Aluminium, gefertigt und gegebenenfalls beschichtet ist. Es ist gezeigt, dass das Energiemodul 300 mittels einer Schraube 93 und einer Schraubemutter 94 montiert ist, die zwischen zwei Kühlrippen 211 verschiebbar gehalten ist. Ferner ist gezeigt, dass das bogenförmige Kopplungselement 22 nur an einer Seite mit einer Halterippe 221 in einer Haltenut 48 der Rohrleitung 4 gehalten ist. Auf der anderen Seite sind das Kopplungselement 22 und die Rohrleitung 4 mit Flanschelementen 29, 49 versehen, die mittels einer Schraubemutter 92 und einer Schraube 91 fest gezogen werden können, deren Schraubenkopf innerhalb der Kammer 23 gehalten ist und daher leicht betätigt werden kann. Auf diese Weise gelingt es, das Kopplungselement 22 fest gegen die Rohrleitung 4 zu pressen, um einen minimalen thermischen Übergangswiderstand zu erzielen.

Während die in den Figuren 1, 2 und 8 gezeigten Rohrleitungen 4 mit Kopplungselementen versehen sind, zeigt Figur 9 eine stark vereinfachte Rohrleitung 4 mit einem praktisch kreisrunden Querschnitt. Die daran befestigten Schellen oder Briden 271, 273, von denen eine mit einer Kopplungsplatte 272 versehen ist, können daher beliebig gedreht und in einer beliebigen Position anhand von Schraubenmuttern 92 und Schrauben91 fixiert werden, deren Schraubenköpfe 91 wiederum in der Kammer 23 gehalten sind. Das Kopplungselement 22 besteht in diesem Fall aus der mehrteiligen Kopplungsgarnitur 271, 272, 273. die Kopplung mit dem Metallkörper 2 erfolgt mittels der Kopplungsplatte 272, die an den Metallkörper 2 angedrückt wird.

Die in den Figuren 8 und 9 gezeigten Ausgestaltungen des Energiepanels 1 zeigen, dass dieses besonders vorteilhaft einstückig aus Metall, insbesondere Aluminium, gefertigt werden kann. Die Befestigung der Energiemodule ist einfach möglich. Aufgrund des Fehlens interner Kühlmittelkanäle, kann das metallene Energiepanel 1 äusserst kompakt aufgebaut werden. In den bevorzugteste und einfachsten Ausgestaltungen des Energiepanels 1 sind die Struktur 5 bzw. der Metallkörper 2 identisch.

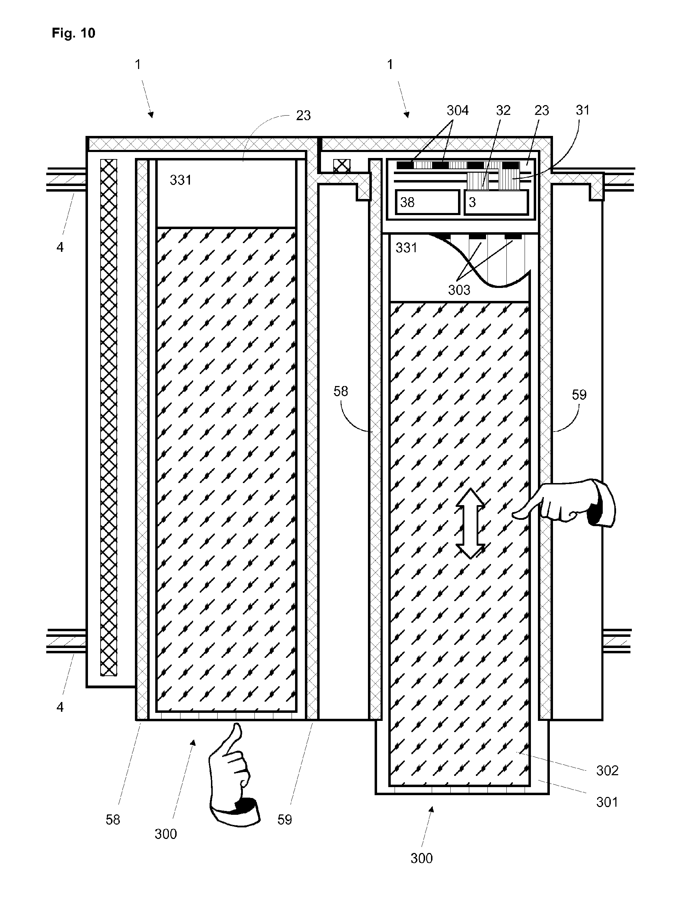

Eine weitere vorteilhafte Ausgestaltung der erfindungsgemässen Energiepanel 1 ist in Figur 10 gezeigt. Bei dieser Ausgestaltung ist das Energiemodul 300 in Halteelemente 58, 59, beispielsweise Führungsnuten derart einführbar, dass dessen frontseitiges Endstück 321 nach dem vollständigen Einschieben des Energiemoduls 300 die Kammer 23 vollständig überdeckt und verschliesst. Das Energiemodul 300 bzw. dessen Endstück 331 dient daher gleichzeitig als Verschlussschieber für die Kammer 23.

Damit der elektrische Kontakt mit der lokalen Steuereinheit 3 nach dem Einschieben des Energiemoduls 300 automatisch erfolgt, sind am Energiemodul 300 und in der Kammer 23 Kontaktleisten 303, 304 vorgesehen, die in der Endstellung des Energiemoduls 300 aneinander anliegen.

Aufgrund des modularen Aufbaus des Energiepanels 1 von Figur 10 resultiert eine technisch und wirtschaftlich in jeder Hinsicht vorteilhafte Lösung. Der Zusammenbau und die Wartung der Energiepanel 1 und somit des gesamten Energieversorgungssystems sind mit minimalem Aufwand möglich. Sofern beispielsweise eines der Energiemodule 300 ausfällt, wird dies vom entsprechenden Signalgeber, beispielsweise einer Leuchtdiode 352 angezeigt. In der Folge kann der Handwerker das fehlerhafte Energiemodul 300 mit wenigen Handgriffen entfernen und durch ein neues ersetzen.

Figur 11 zeigt Elemente des Rohrleitungssystems mit Segmenten von Rohrleitungen 4 gemäss Figur 2, die anhand von Kopplungselementen 81 mechanisch miteinander verbindbar sind und deren Kanäle 41,42 anhand von Verbindungsteilen 83, 84, 85 zusammenschliessbar oder mit Zufluss- und Abschlussleitungen verbindbar sind. Wie bereits unter Figur 2 ausgeführt, sind die Rohrleitungen 4 mit wenigstens einer Kopplungsnut 432 versehen, innerhalb der ein Kopplungselement 81 seitlich verschiebbar gehalten und fixiert werden kann. Dazu weist die Kopplungsnut 432 vorzugsweise ein T- oder Schwalbenschwanzförmiges Profil auf. Zur Arretierung des Kopplungselements 81 ist dieses mit einer Gewindebohrung 811 versehen, in die ein frontseitig vorzugsweise mit einer Ringschneide versehener Gewindestift oder eine Schraube 812 gegen die obere Nutfläche drehbar und derart anpressbar ist, dass dieser kraftschlüssig mit dem Körper der Rohrleitung verbunden ist bzw. die Ringschneide formschlüssig in diesen eingreift. Zur Verbindung der Kanäle 41, 42 sind Verbindungsteile vorzugsweise aus Kunststoff 83, 84, 85 vorgesehen, die Rohrteile aufweisen, die dicht abschließend in die Kanäle 41, 42 eingeschoben werden können. Das erste Verbindungsteil 83, welches der Verbindung von zwei Rohrleitungen 4 dient, weist für jeden der wenigstens zwei Kanäle 41, 42 ein Rohrteil oder zwei zueinander korrespondierende Rohrteile auf, die gegebenenfalls mittels einer Platte miteinander verbunden sind, welche vorzugsweise denselben Querschnitt aufweist, wie die Rohrleitung 4. Zur Verbindung der Kanäle 41, 42 ist das zweite Verbindungsteil 84 vorgesehenen, welches zwei miteinander verbundene und achsparallel ausgerichtete Rohrteile aufweist. Nach dem Einschieben des zweiten Verbindungsteils 84 bilden die beiden Kanäle 41, 42 der Rohrleitung 4 somit einen einzigen, durchgehenden Kanal der an derselben Seite in die Rohrleitung eintritt und an dieser wieder austritt. An den Eintritts- und Austrittsstellen sind dritte Verbindungsteile 85 vorgesehen. Zum Halten der in die Rohrleitung 4 eingesetzten zweiten und/oder dritten Verbindungsteile 84, 85 dient ein mit einer Gewindebohrung 821 versehenes Winkelstück 82, das in die Kopplungsnut 432 einführbar und mittels einer Schraube 821 fixierbar ist.

### Literaturverzeichnis

[1] EP 0 335 261 B1
[2] FLACHKABELSYSTEM TECHNOFIL, Produkteschrift der Woertz AG, Muttenz vom Mai 2004

## Patentansprüche

1. Energieversorgungsvorrichtung mit wenigstens einem Energiepanel (1), das eines oder mehrere, insbesondere der Aufnahme von Solarenergie dienender Energiemodule (300) aufweist, die mit Stromversorgungsleitungen (33) verbunden sind, **dadurch gekennzeichnet, dass** wenigstens eine ausserhalb des wenigstens einen Energiepanels (1) geführte, metallene Rohrleitung (4) vorgesehen ist, die mit einer Kopplungsvorrichtung (22) mechanisch und thermisch mit dem Energiepanel (1) gekoppelt ist und in der wenigstens ein Kanal (41, 42) vorgesehen ist, durch den ein flüssiges Wärmetransportmedium (45) führbar ist, durch das thermische Energie von dem als lokale Wärmeenergiequelle dienenden Energiepanel (1) hin zu einer zentralen Wärmeenergiesenke (400) transferierbar ist.

2. Energieversorgungsvorrichtung nach Anspruch 1, **dadurch gekennzeichnet, dass** eine oder mehrere vorzugsweise waagerecht auf dem Dachstuhl oder an einer Gebäudewand montierte Rohrleitungen (4), vorzugsweise Profile mit einem zumindest annähernd kreisförmigen Querschnitt aus Aluminium, die Energiepanel (1) tragen.

3. Energieversorgungsvorrichtung nach Anspruch 1 oder 2,
**dadurch gekennzeichnet, dass** die Rohrleitung (4) wenigstens einen ersten Kanal (41), in dem das Wärmetransportmedium (45) in eine Richtung geführt wird, und wenigstens einen zweiten Kanal (42) aufweist, in dem das Wärmetransportmedium (45) zurückgeführt wird, und/oder dass das Wärmetransportmedium (45) vorzugsweise über einen Umschalter (78) und eine Kühlzone (77) in das Rohrleitungssystem eingeführt wird.

4. Energieversorgungsvorrichtung nach Anspruch 1, 2 oder 3, **dadurch gekennzeichnet, dass** die zumindest abschnittsweise vorzugsweise mit einer Isolationsschicht (48) versehene Rohrleitung (4) einen achsparallel verlaufenden Kabelkanal (47) aufweist, der vorzugsweise in Form einer Ausnehmung oder Nut in den Körper der Rohrleitung (4) eingelassen ist und in dem die Stromversorgungsleitungen (33) und gegebenenfalls Steuerleitungen (34) angeordnet sind.

5. Energieversorgungsvorrichtung nach einem der Ansprüche 1-4, **dadurch gekennzeichnet, dass**
a) die Kopplungsvorrichtung (22) einerseits einstückig mit einem Metallkörper (2) des Energiepanels (1) und andererseits mit Flanschen oder Schellen (29, 273) oder Kopplungselementen (28, 48; 29, 49), die an der Rohrleitung (4) angeformt oder lose gehalten sind, verbunden ist, oder
b) die Kopplungsvorrichtung (22) einerseits mit dem Metallkörper (2) des Energiepanels (1) verschraubt und andererseits mit Flanschen oder Schellen (29, 273) oder Kopplungselementen (28, 48; 29, 49), die an der Rohrleitung (4) angeformt oder lose gehalten sind, verbunden ist.

6. Energieversorgungsvorrichtung nach einem der Ansprüche 1-5, **dadurch gekennzeichnet, dass** das Energiepanel (1) mit einer lokalen Steuereinheit (3) versehen ist, die über die Steuerleitungen (34) mit einer zentralen Steuereinheit (3000) verbunden und die zur Steuerung des von den Energiemodulen (300) abgegebenen Stromes hin zu einer im Energiepanel (1) vorgesehenen lokalen Stromspeichereinheit (38) oder hin zu wenigstens einem zentralen Stromabnehmer (3003; 3005; 3038) sowie zur Steuerung der Abgabe des Stromes aus der lokalen Stromspeichereinheit (38) geeignet ist.

7. Energieversorgungsvorrichtung nach einem der Ansprüche 1-6, **dadurch gekennzeichnet, dass** die Rohrleitungen (4) mit einer Kopplungsnut (432) versehen sind, in der ein mit wenigstens einer Gewindebohrung (811) versehenes Kopplungselement (81, 82) verschiebbar gehalten und mit einem frontseitig vorzugsweise mit einer Ringschneide versehen Gewindestift (812) gehalten ist.

8. Energiepanel (1) für eine Energieversorgungsvorrichtung nach einem der Ansprüche 1-6, mit einem oder mehreren, insbesondere der Aufnahme von Solarenergie dienenden Energiemodulen (300), mittels derer elektrische Energie an Stromversorgungsleitungen (33) lieferbar ist, **dadurch gekennzeichnet, dass** ein als lokale Wärmesenke dienender Metallkörper (2) mit einem Kühlelement (21) vorgesehen ist, welches die vom Energiepanel (1) aufgenommene Wärmeenergie absorbiert und der mit einer Kopplungsvorrichtung (22) versehen oder verbindbar ist, die mit der Rohrleitung (4) derart verbindbar ist, dass die vom Kühlelement (21) aufgenommene Wärmeenergie an die Rohrleitung (4) transferierbar und das Energiepanel (1) gleichzeitig stabil gehalten ist.

9. Energiepanel (1) nach Anspruch 7, **dadurch gekennzeichnet,**
a) **dass** das Energiepanel (1) eine Struktur (5) mit wenigstens einer Öffnung (51) aufweist, innerhalb der der Metallkörper (2) von einer Gussmasse (6) gehalten ist; oder
b) **dass** das Energiepanel (1) eine metallene Struktur (5) aufweist, mit der der Metallkörper (2) einstückig verbunden ist.

10. Energiepanel (1) nach Anspruch 8, **dadurch gekennzeichnet, dass** die vorzugsweise in Form eines Ziegels oder eines Wandelements vorliegende Struktur (5)
a) wenigstens eine Öffnung (51) aufweist, innerhalb der wenigstens ein Energiemodul (300) mittels der Gussmasse (6) oder Befestigungselementen gehalten ist; oder
b) Halteelemente (58, 59) aufweist, die dem Halten vorzugsweise dem Einschieben des Energiemoduls (300) dienen.

11. Energiepanel (1) nach einem der Ansprüche 7 - 9, **dadurch gekennzeichnet, dass** eine mit einer lokalen Stromspeichereinheit (38) gekoppelten lokale Steuereinheit (3) vorgesehen ist, die über Steuerleitungen (34) mit einer zentralen Steuereinheit (3000) verbindbar und die zur Steuerung des von dem wenigstens einen Energiemodul (300) zugeführten Stromes hin zur lokalen Stromspeichereinheit (38) oder hin zu wenigstens einem zentralen Stromabnehmer (3003; 3005; 3038) und die ferner zur Steuerung der Abgabe des Stromes aus der lokalen Stromspeichereinheit (38) geeignet ist.

12. Energiepanel (1) nach Anspruch 10, **dadurch gekennzeichnet, dass** der Metallkörper (2) eine vorzugsweise von einer Kammer (23) umschlossene Öffnung (234) aufweist, durch die ein mit der Steuereinheit (3) verbundenes Anschlusskabel (32) geführt ist, welches mit den in der Rohrleitung (4) geführten Stromversorgungsleitungen (33) und Datenleitungen (34) verbindbar ist.

13. Energiepanel (1) nach Anspruch 11, **dadurch gekennzeichnet, dass** die Kammer (23) vorzugsweise einstückig mit dem Metallkörper (2) verbunden und durch eine Klappe (231), einen Schieber, oder das in die Halteelemente (58, 59) einschiebbare Energiemodul (300) abschliessbar ist.

14. Energiepanel (1) nach einem der Ansprüche 9-12, **dadurch gekennzeichnet, dass** das Energiemodul (300) ein Substrat (301) mit wenigstens einer Energiezelle, vorzugsweise Solarzelle (302), aufweist, welche über Anschlussleitungen mit Kontakten (303) verbunden sind, die nach der Montage des Energiemoduls (300) mit Kontakten (304) zusammenwirken, die über Anschlussleitungen (301) mit der lokalen Steuereinheit (3) verbunden sind.

15. Energiepanel (1) nach einem der Ansprüche 9-13, **dadurch gekennzeichnet, dass** die lokale Steuereinheit (3) mit Signalempfängern (351), wie Sensoren, und Signalgebern (352), wie Leuchtdioden verbunden ist, mittels derer der Status des Energiepanels (1) signalisierbar ist.

16. Energiepanel (1) nach einem der Ansprüche 9-13, **dadurch gekennzeichnet, dass** der Metallkörper (2) über den Kühlelement (21) thermisch und/oder mechanisch mit dem wenigstens einen Energiemodul (300) gekoppelt ist, und diesem Wärme entzieht.
